# EUROPÄISCHE PATENTSCHRIFT

(11) **EP 2 129 928 B1**
(45) Veröffentlichungstag und Bekanntmachung des Hinweises auf die Patenterteilung: **31.10.2012**
(21) Anmeldenummer: 08707498.5
(22) Anmeldetag: 01.02.2008
(51) Int. Cl.: F16D 25/0638, F16D 25/08

(54) **KUPPLUNGSANORDNUNG**
CLUTCH ARRANGEMENT
DISPOSITIF D'ACCOUPLEMENT

(30) Priorität: 03.02.2007 DE 102007005461
(43) Veröffentlichungstag der Anmeldung: 09.12.2009
(73) Patentinhaber: BorgWarner, Inc., Auburn Hills, MI 48326-2872 (US)
(72) Erfinder: GÜNTER, Frank, 76228 Karlsruhe (DE)
(74) Vertreter: Leckel, Ulf
(86) Internationale Anmeldenummer: PCT/EP2008/000812
(87) Internationale Veröffentlichungsnummer: WO 2008/095648

(56) Entgegenhaltungen:
- EP-A- 0 011 390
- FR-A- 2 576 073
- US-A1- 2005 279 605

## Beschreibung

Die Erfindung bezieht sich auf eine Kupplungsanordnung mit den oberbegrifflichen Merkmalen des Patentanspruchs 1.

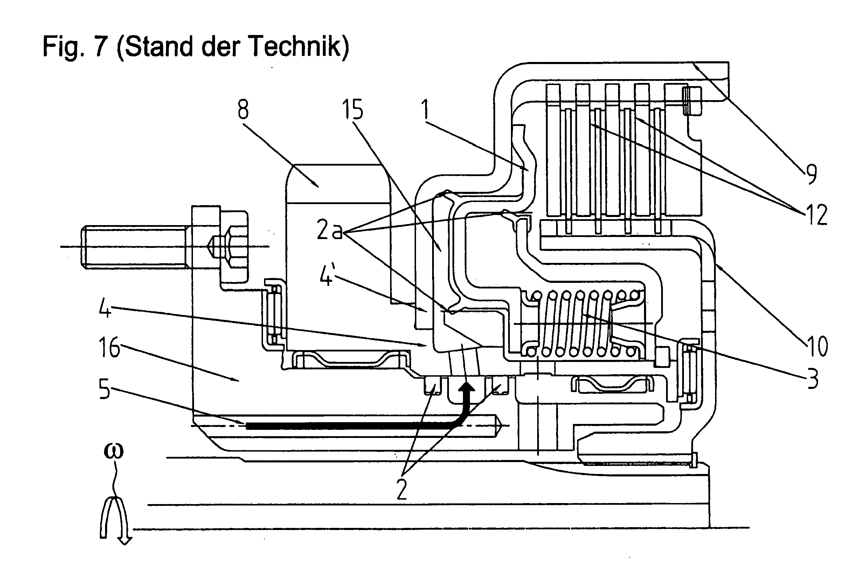

Fig. 7 zeigt eine beispielhafte Einfachkupplung gemäß dem Stand der Technik mit rotierendem Kolben 1 in Form eines Hohlzylinders, dessen Stirnseite in eine hohlzylinderförmige bzw. ringförmige Kammer 15 eines aus mehreren Komponenten gebildeten hohlzylinderförmigen Zylinders 4, 4' ragt. Der Zylinder 4, 4' ist ausgelegt, zusammen mit dem Kolben 1 um eine Rotationsachse relativ zu gehäusefesten Komponenten zu rotieren. Alternativ zu einer solchen Kupplungsanordnung, bei der beide Elemente, das heißt Kolben 1 und Zylinder 4, 4' um die Rotationsachse rotieren, sind auch Zylinderanordnungen bekannt, bei denen beide Elemente, das heißt Kolben und Zylinder, gehäusefest angeordnet sind.

Derartige Anordnungen weisen eine Vielzahl von Nachteilen auf. Neben Kolbendichtelementen 2a, insbesondere Lippendichtelementen, zur Abdichtung des Kolbens 1 relativ zur Wandung der Kammer 15 müssen zusätzlich Drehdurchführungsdichtungen zur Abdichtung des Übergangs einer Leitungsanordnung 5 von einer gehäusefesten Komponente 16 zu den rotierenden Komponenten ausgebildet werden. Insbesondere die zusammen mit dem Kolben 1 rotierenden Kolbendichtelemente 2a bergen die Gefahr einer Leckage. Insbesondere die in üblichen Systemen eingesetzten Kolbendichtungen erfordern eine sorgfältige Montage, da diese Kolbendichtungen oft gegen die Vorzugsrichtung in den Zylinder eingeführt werden müssen. Dabei können die Lippen einer solchen Dichtung umklappen und zum Totalausfall des Systems führen. Ein weiterer wesentlicher Nachteil besteht in der ungünstigen Hysterese von Lippendichtungen.

Ein weiterer Nachteil einer solchen Anordnung besteht oft in dem Erfordernis eines Fliehöl-Druckkompensationskolbens. Bei solchen Bauformen kann sich ein Fliehöldruck aufbauen, der durch geeignete Maßnahmen, wie z.B. eine Rückstellfeder oder einen Kompensationskolben, kompensiert werden muss. Ein solcher Kompensationskolben ist erforderlich, um einen Fliehöldruck zu kompensieren, welcher in einem rotierenden Ölzuführungskanal als rotierendem Abschnitt der Leitungsanordnung durch Rotation entsteht.

Zwingend erforderlich ist auch eine Betätigungskolben-Rückstellfeder 3, um eine Rückstellung des Kolbens 1 über die verschiedenen fahrbaren Rotationsgeschwindigkeiten hinweg gegen den Druck in der Kammer sicherzustellen.

Die FR 2 576 073 beschreibt eine ähnliche Kupplungsanordnung, bei der ein Ringkolben in einer Ringkammer axialverschiebbar angeordnet ist. Die Ringkammer ist jedoch feststehend ausgebildet, während der Ringkolben relativ zu der Ringkammer rotierbar ist. Bei der bekannten Kupplungsanordnung kommt es bei einer Axialbewegung des Ringkolbens zu einem verstärkten Hystereseverhalten, was die Regelbarkeit des bekannten Systems erschwert.

Die Aufgabe der Erfindung besteht darin, eine Kupplungsanordnung zu schaffen, deren Regelbarkeit verbessert ist.

Diese Aufgabe wird durch die Kupplungsanordnung mit den Merkmalen des Patentanspruchs 1 gelöst. Vorteilhafte Ausgestaltungen sind Gegenstand der abhängigen Ansprüche.

Bevorzugt wird demgemäß eine Kupplungsanordnung mit einer gehäusefesten Komponente, einem Kolben, der relativ zur gehäusefesten Komponente um eine Rotationsachse rotierbar angeordnet ist, einer den Kolben zumindest teilweise umgebenden Kammer und einer Leitungsanordnung, die zum Leiten eines Druckmediums zur Kolbenbetätigung durch die gehäusefeste Komponente zur Kammer führt. Die Kupplungsanordnung wird dadurch vorteilhaft, dass die Kammer als Bestandteil der gehäusefesten Komponente ausgebildet ist und der Kolben zumindest mit seinem stirnseitigen Bereich in der Kammer rotierbar angeordnet ist. Mit anderen Worten rotiert der Kolben in seinem den Druckraum begrenzenden und zugleich feststehenden Zylinder, der so als ein Teil des Getriebegehäuses bzw. einer damit fest verbundenen Komponente ausgebildet sein kann. Bei der erfindungsgemäßen Kupplungsanordnung befindet sich der rotierende Kolben ständig in Relativbewegung und weist daher im Fall einer axialen Betätigung eine nur sehr kleine Hysterese auf, was für die Regelbarkeit des Gesamtsystems sehr günstig ist.

In einer vorteilhaften Ausführungsform ist der Kolben ferner zumindest stirnseitig hohlzylinderförmig ausgebildet, während die Kammer ring- oder hohlzylinderförmig ausgebildet ist. Die Kammer umgibt den Kolben entsprechend vorzugsweise in dessen stirnseitigem Bereich.

Bei einer derart aufgebauten und hydraulisch betätigten Kupplungsanordnung in Form einer Einfachkupplung oder auch Mehrfachkupplung ist somit der überwiegende Teil der Kolbenölseite stationär. Dadurch baut sich kein oder nur ein geringer Fliehöldruck auf. Ein Fliehkraftausgleich gegen ein üblicherweise als Druckmedium eingesetztes Hydraulik-Öl kann entfallen. Mit anderen Worten wird nur ein Teil des zur Druckbeaufschlagung des Kolbens verwendeten Kolbenöls oder auch gar kein Kolbenöl über Leitungsabschnitte zugeführt, welche sich in Rotation um eine Rotationsachse befinden und welche sich dabei in radialer Richtung verlaufend seitlich der Rotationsachse erstrecken.

Vorteilhaft sind Anordnungen, bei denen Dichtungen, insbesondere Drehdurchführungsdichtungen zwischen Wandungen der Kammer und des Kolbens angeordnet sind. Anstelle von Drehdurchführungsdichtungen zwischen stationären drehfesten und rotierenden Komponenten im Bereich der Leitungsanordnung und zusätzlichen Kolbendichtungen zwischen Kolben und Kammer reicht somit der Einsatz von nur zwei Drehdurchführungsdichtungen aus, die gleichzeitig die axiale Bewegung des Kolbens erlauben. Die Gefahr einer zusätzlichen Leckage in den rotierenden Dichtungen entsteht praktisch nicht, da gegenüber konventionellen Systemen, welche rein axial wirken, üblicherweise als Lippendichtungen ausgeführte Dichtelemente eliminiert werden und die Funktion der axialen Verschiebbarkeit durch die ohnehin vorhandenen Drehdurchführungsdichtungen übernommen wird. Insbesondere wird auch die Montage vereinfacht, da Lippendichtungen nicht mehr erforderlich sind.

Eine Vorrichtung zur Fliehkraftkompensation könnte, sofern überhaupt erforderlich, gering dimensioniert sein und vorzugsweise in nur einem oberen Rotationsgeschwindigkeitsbereich der rotierbaren Komponente wirkend vorgesehen sein. Durch die Ausführung des nicht-rotierenden Zylinders, der über einen nicht-rotierenden Ölzuführungskanal in Form der Leitungsanordnung mit Drucköl beaufschlagt werden kann, kann sich kein nennenswerter Fliehöldruck aufbauen, welcher in konventionellen Systemen üblicherweise durch einen Fliehöldruck-Kompensationskolben oder eine stärker dimensionierte Rückstellfeder kompensiert werden muss.

Auf eine Fliehöl-Kompensationseinrichtung in Form eines Fliehöldruck-Kompensationskolbens wird gemäß einer bevorzugten Ausführungsform ganz verzichtet. Alternativ kann eine solche Kompensationsanordnung zumindest geringer dimensioniert und nur bei beispielsweise sehr hohen Rotationsgeschwindigkeiten eingesetzt werden.

Ein weiterer Vorteil einer solchen Kupplungsanordnung besteht darin, dass eine Betätigungskolben-Rückstellfeder sehr schwach ausgeführt werden kann oder sogar komplett entfallen kann, da sich der Kolben als Betätigungskolben für ein Lamellenpaket bei einer solchen Bauform sehr leicht öffnet und daher durch die Öffnungskraft im Lamellenpaket selbst hinreichend zurückgestellt wird. Dies vereinfacht die Ausführung eines solchen Rückstellelements und erhöht den Wirkungsgrad, da auch bei niedrigen Drehzahlen ein größtmöglicher Anteil des Betätigungsdrucks auch zur axialen Anpressung des Lamellenpakets zur Verfügung steht und nicht teilweise durch die Rückstellfeder reduziert wird.

Vorteilhaft ist auch eine Kupplungsanordnung in Verbindung mit einem Getriebe, bei der eine auftretende Axialkraft über eine getriebeseitige Welle und über ein Lager der getriebeseitigen Welle in ein Gehäuse der Kupplungsanordnung rückgeführt wird. Dabei können die in üblicher Weise als Schrägverzahnung ausgeführten Zahnrädern auftretende Axialkräfte kompensiert werden. Entsprechend kann der Antrieb auch über eine Eingangsscheibe oder über ein Ketten- bzw. Zahnrad erfolgen.

Die Umsetzung des vorteilhaften Prinzips einer solchen Kupplungsanordnung ist vorteilhaft nicht nur in einer Einfachkupplung sondern auch in Mehrfachkupplungen anwendbar. Solche Kupplungen können dabei mit oder ohne integriertem Torsionsschwingungsdämpfer ausgebildet sein.

Ein Ausführungsbeispiel wird nachfolgend anhand der Zeichnung näher erläutert. Dabei werden verschiedene Ausführungsformen anhand verschiedener Figuren skizziert, wobei in den verschiedenen Figuren verwendete gleich lautende Bezugszeichen für gleiche oder gleichwirkende Komponenten und/oder Funktionen stehen, so dass eine Beschreibung vorzugsweise nur anhand jeweils einer einzelnen der Figuren vorgenommen wird und Mehrfachbeschreibungen zu den übrigen Figuren entfallen können. Es zeigen:
- Fig. 1: eine Schnittansicht durch eine Einfachkupplung mit rotierendem Kolben in stehendem Zylinder gemäß einer ersten Ausführungsform, bei der eine Axialkraft über geeignete Lagerung in der Kupplung abgestützt ist,
- Fig. 2: einen Axialkraftfluss im Betätigungsfall der Kupplung gemäß Fig. 1,
- Fig. 3: eine alternative Einfachkupplung mit rotierendem Kolben in stehendem Zylinder, wobei die Axialkraft der Kupplungsbetätigung über ein Getriebelager abgestützt ist,
- Fig. 4: einen Axialkraftfluss im Betätigungsfall der Kupplung gemäß Fig. 3,
- Fig. 5: eine Doppelkupplung mit rotierenden Kolben in stehendem Zylinder,
- Fig. 6: eine Doppelkupplung mit rotierenden Kolben in stehendem Zylinder und mit einem integrierten Torsionsschwingungsdämpfer und
- Fig. 7: eine Einfachkupplung mit rotierendem Kolben in rotierendem Zylinder gemäß dem Stand der Technik.

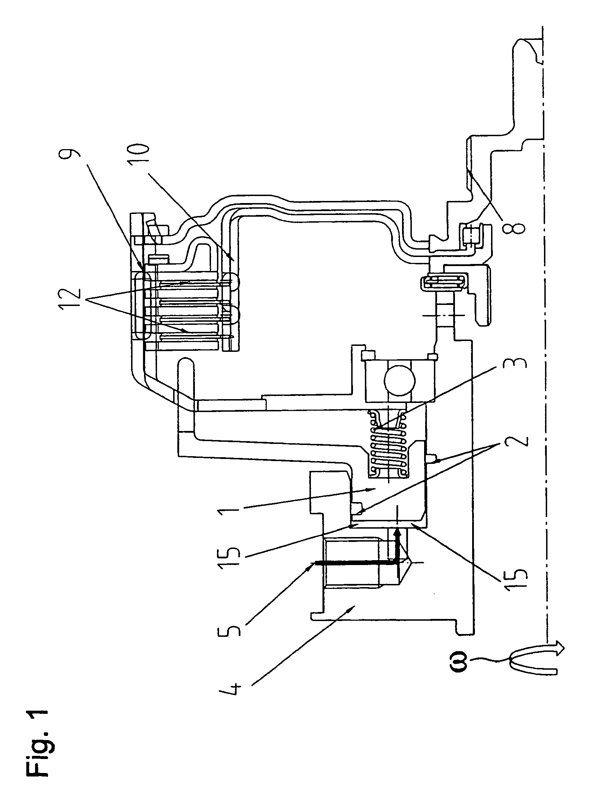

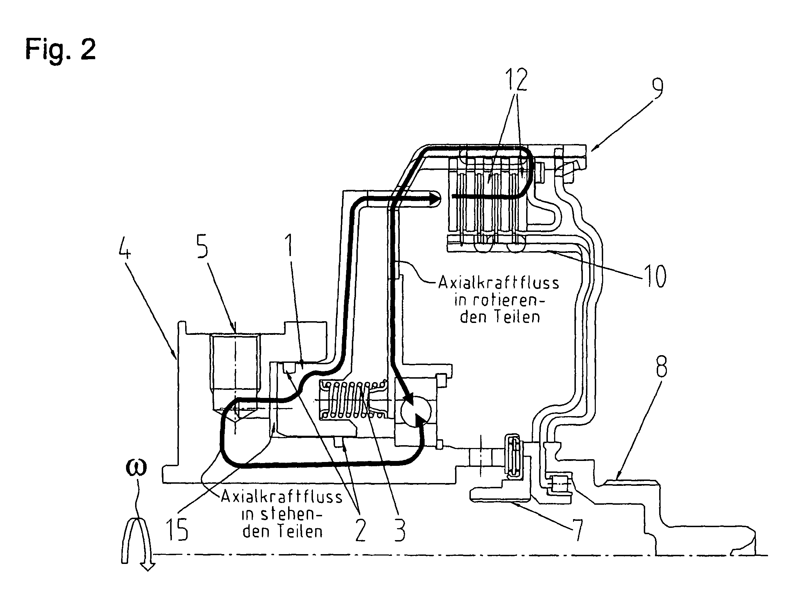

Wie dies aus Fig. 1 und auch den weiteren Figuren 2 bis 6 ersichtlich ist, wird bei einer Mehrscheibenkupplung ein Motordrehmoment über einen Antriebsflansch 8 auf einen antriebsseitigen Lamellenträger 9 übertragen. Durch Aufbringen einer Axialkraft auf ein im antriebsseitigen Lamellenträger 9 angeordnetes Lamellenpaket 12 mittels eines hohlzylinderförmigen bzw. ringförmigen Kolbens 1, welcher als ein Kupplungs-Betätigungskolben ausgebildet ist, wird im Lamellenpaket 12 ein Reibmoment auf einen getriebeseitigen Lamellenträger 10 übertragen. Bei diesen Komponenten handelt es sich um Komponenten, welche zusammen mit dem Antriebsflansch 8 rotationsfest an einer Antriebswelle gelagert sind, so dass diese Komponenten um eine gemeinsame Rotationsachse ω rotieren. Die Antriebswelle und darüber der Antriebsflansch 8, der antriebswellenseitige Lamellenträger 9, das Lamellenpaket 12, der getriebeseitige Lamellenträger 10 und der Kolben 1 sind somit gemeinsam in Rotation versetzbar innerhalb eines Gehäuses einer solchen Kupplungsanordnung gelagert.

In üblicher Art und Weise ragt der Kolben 1 mit seiner mit einem Druckmedium, insbesondere Hydraulik-Öl beaufschlagbaren Stirnseite in eine hohlzylinderförmige bzw. ringförmige Kammer 15 hinein. Die Kammer 15 ist Bestandteil einer gehäusefesten Komponente 4, welche somit einen in einem Getriebe bzw. Gehäuse feststehenden hohlzylinderförmigen Zylinder ausbildet. Bei einer solchen Anordnung rotiert somit ein zylinderförmig aufgebauter Kolben 1 in einer gehäusefest angeordneten Kammer 15 des durch die gehäusefeste Komponente 4 ausgebildeten Zylinders.

Zwischen innenseitigen und außenseitigen Wandungen der Kammer 15 und des Kolbens 1 sind Dichtungselemente 2 ausgebildet, welche vorzugsweise als Drehdurchführungsdichtungen ausgebildet sein können. Die Dichtungselemente 2 werden vorteilhaft sowohl zur hydraulischen Abdichtung der Drehbewegung des Kolbens 1 relativ zur gehäusefesten Komponente 4 als auch zur Abdichtung der Axialbewegung bei einer Kolbenbetätigung des Kolbens 1 eingesetzt.

Optional, jedoch bei derartigen Ausführungsformen nicht mehr zwingend erforderlich, ist in Wirkrichtung rückseitig des Kolbens 1 eine Rückstellfeder 3 angeordnet. Die Rückstellung des Kolbens 1 kann, sofern überhaupt erforderlich, direkt über ein geeignetes Federelement in Form der Rückstellfeder 3 an einem ebenfalls mit der Eingangsdrehzahl rotierenden Steg des antriebsseitigen Lamellenträgers 9 erfolgen.

Eine Leitungsanordnung 5 zum Zuführen des Druckmediums in die Kammer 15 kann vorteilhaft ausschließlich durch nicht rotierende Elemente wie die den Zylinder ausbildenden gehäusefeste Komponente 4 bis zur Kammer 15 hin geführt werden.

Fig. 2 zeigt einen Axialkraftfluss im Betätigungsfall der Kupplung gemäß Fig. 1. Die Axialkräfte werden auf relativ direktem und kurzem Weg übertragen und ermöglichen eine sehr kleine Hysterese durch Ausführung der Dichtungen als rotierende Dichtungen, was die Regelbarkeit des Systems günstig macht. Der kurze Weg bewirkt eine kleinere Elastizität von beteiligten Komponenten des Systems. Daraus folgt eine weitere Verringerung der Hysterese.

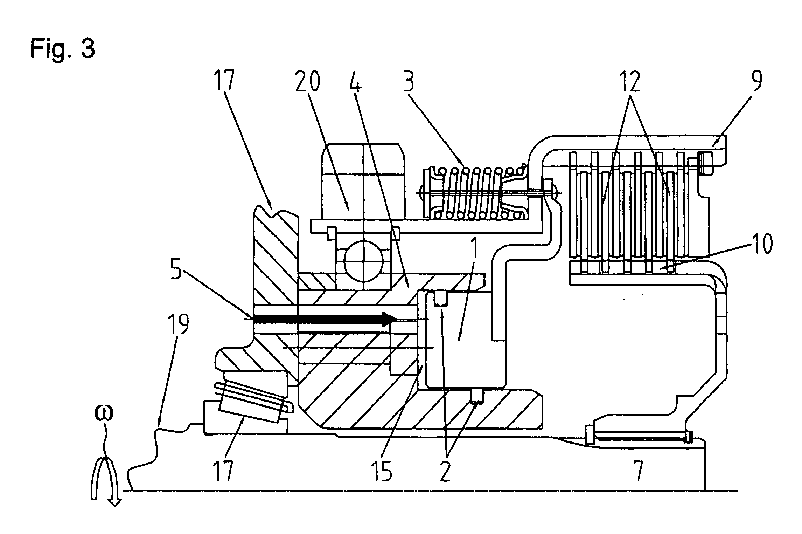

Fig. 3 zeigt eine alternative Einfachkupplung mit einem rotierenden Kolben 1 in einem stehenden Zylinder, welcher wiederum durch eine gehäusefeste Komponente 4 ausgebildet ist. In vorteilhafter Art und Weise wird eine Axialkraft der Kupplungsbetätigung über ein Getriebelager 17 abstützbar.

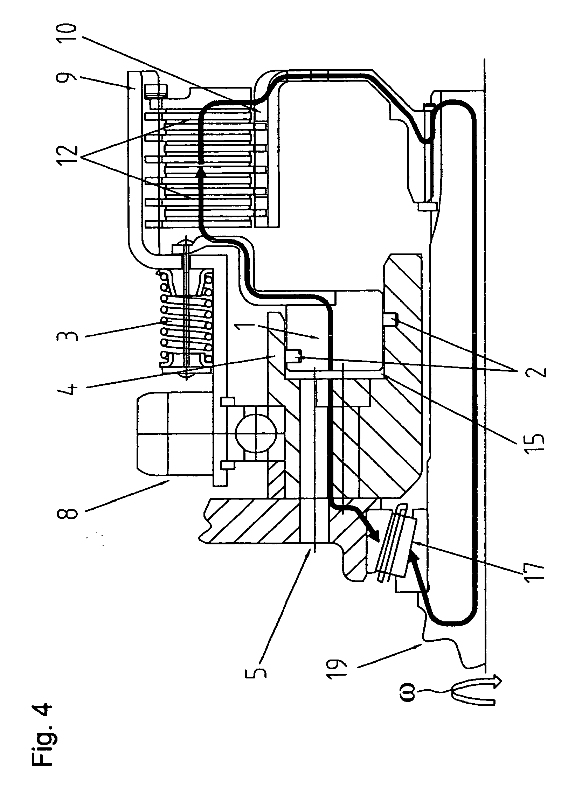

Fig. 4 zeigt den im Wesentlichen nur axial gerichteten Kraftfluss im Betätigungsfall einer Kupplung gemäß Fig. 3 Dargestellt ist dabei sowohl der Axialkraftfluss in stehenden Teilen als auch der Axialkraftfluss in rotierenden Teilen.

Die Fig. 3 und 4 zeigen somit eine Kupplungsanordnung, bei welcher die auftretende Axialkraft über eine getriebeseitige Welle 19 und über deren Lager in das Gehäuse rückgeführt wird. Bei einer solchen Anordnung können die in den üblicherweise als Schrägverzahnung ausgeführten Zahnrädern auftretende Axialkräfte kompensiert werden. Der Antrieb kann analog zu dem Antrieb über einen Antriebsflansch gemäß Fig. 1 über eine Eingangsscheibe oder über ein anhand Fig. 3 dargestelltes Antriebsrad 20 in Form eines Ketten- bzw. Zahnrades erfolgen.

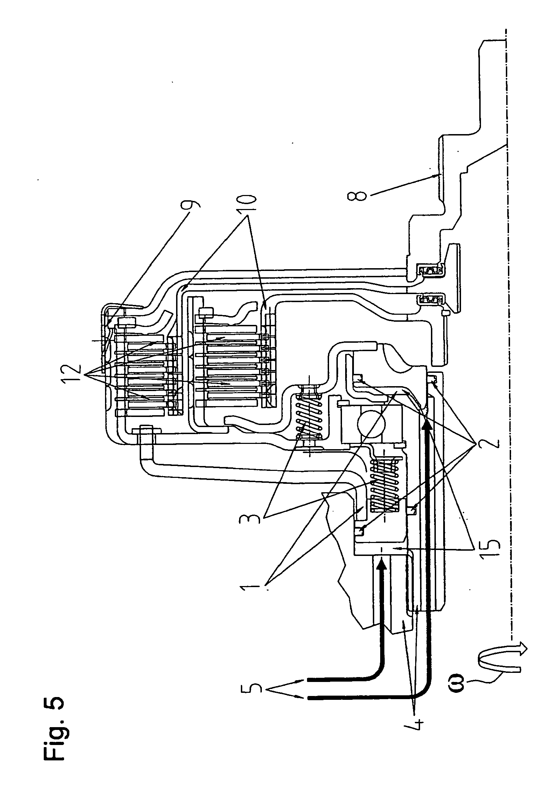

Fig. 5 zeigt eine Doppelkupplung mit zwei rotierenden Kolben 1 in einem stehenden Zylinder, welcher wieder durch eine oder zwei hinsichtlich der Rotationsbewegung gehäusefeste Komponenten 4 ausgebildet wird. Insbesondere sind auch bei einer solchen Anordnung Fliehöldrücke aufgrund der Leitungsführung der Leitungsanordnung zum Zuführen der Druckmedien zu den Kammern vernachlässigbar.

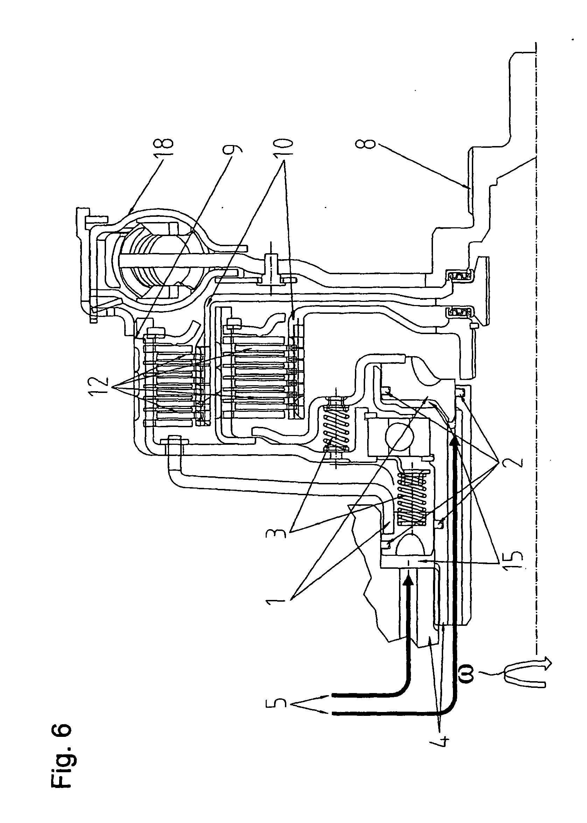

Fig. 6 zeigt eine beispielhafte Doppelkupplung mit zwei rotierenden Kolben 1 in einem stehenden Zylinder, wobei zusätzlich ein integrierter Torsionsschwingungsdämpfer 18 in der Kupplungsanordnung vorgesehen ist.

Alle Ausführungsformen zeichnen sich dadurch aus, dass die Kolben jeweils innerhalb der ihnen zugeordneten Kammern rotieren.

### Bezugszeichenliste

- 1: Kolben
- 2: Dichtungselemente
- 2a: Kolbendichtelemente
- 3: Rückstellfeder
- 4: gehäusefeste Komponente
- 5: Leitungsanordnung
- 8: Antriebsflansch
- 9: antriebsseitiger Lamellenträger
- 10: getriebeseitiger Lamellenträger
- 12: Lamellenpaket
- 15: hohlzylinderförmige Kammer
- 16: gehäusefeste Komponente
- 17: Getriebelager
- 18: Torsionsschwingungsdämpfer
- 19: Welle
- 20: Antriebsrad
- ω: Rotationsachse

## Patentansprüche

1. Kupplungsanordnung mit
- einer gehäusefesten Komponente (4),
- einem Kolben (1), der relativ zur gehäusefesten Komponente (4) um eine Rotationsachse (ω) rotierbar angeordnet ist,
- einer Kammer (15), die den Kolben (1) zumindest teilweise umgibt und die als Bestandteil der einen Zylinder ausbildenden gehäusefesten Komponente (4) ausgebildet ist, wobei der Kolben (1) in der Kammer (15) rotierbar angeordnet ist, und
- einer Leitungsanordnung (5), die zum Leiten eines Druckmediums zur Kolbenbetätigung durch die gehäusefeste Komponente (4) zur Kammer (15) führt,
**dadurch gekennzeichnet, dass** der Kolben (1) derart angeordnet ist, dass sich dieser im Betrieb ständig in Relativbewegung zur gehäusefesten Komponente (4) befindet.

2. Kupplungsanordnung nach Anspruch 1,
**dadurch gekennzeichnet, dass** ein Motordrehmoment über einen Antriebsflansch (8) oder ein Antriebsrad (20) auf einen antriebsseitigen Lamellenträger (9) übertragbar ist, wobei der Kolben (1) rotationsfest mit dem Antriebsflansch (8) oder Antriebsrad (20) und dem antriebsseitigen Lamellenträger (9) verbunden ist.

3. Kupplungsanordnung nach einem der Ansprüche 1 oder 2, **dadurch gekennzeichnet, dass** Dichtungen (2) zwischen Wandungen der Kammer (15) und des Kolbens (1) angeordnet sind zur hydraulischen Abdichtung der Drehbewegung und der Axialbewegung des Kolbens (1).

4. Kupplungsanordnung nach einem der Ansprüche 1 bis 3, **dadurch gekennzeichnet, dass** keine Vorrichtung zur Fliehkraftkompensation in Form eines Fliehöldruck-Kompensationskolbens vorgesehen ist.

5. Kupplungsanordnung nach einem der Ansprüche 1 bis 4 in Verbindung mit einem Getriebe,
**dadurch gekennzeichnet, dass** die Kupplugsanordung eine über ein Lager gelagerte getriebeseitige Welle (19) aufweist, wobei eine Axialkraft über die getriebeseitige Welle (19) und das Lager in der gehäusefesten Komponente (4), bzw. in ein Gehäuse der Kupplungsanordnung oder ein Getriebegehäuse rückführbar ist.

6. Kupplungsanordnung nach einem der Ansprüche 1 bis 5, **dadurch gekennzeichnet, dass** diese mit zumindest einem weiteren Kolben als Mehrkolben-Kupplungsanordnung ausgebildet ist, wobei auch der weitere Kolben (1) rotierbar in einer dem Kolben zugeordneten Kammer (15) eines gehäusefesten Zylinders angeordnet ist.

7. Kupplungsanordnung nach einem der Ansprüche 1 bis 6, **dadurch gekennzeichnet, dass**
- der Kolben (1) hohlzylinderförmig, insbesondere zumindest stirnseitig hohlzylinderförmig, ausgebildet ist und
- die Kammer (15) ring- oder hohlzylinderförmig ausgebildet ist.

## Claims

1. Clutch arrangement having
- a component (4) that is fixed with respect to a housing,
- a piston (1) that is arranged so as to be rotatable about an axis of rotation (ω) relative to the component (4) that is fixed with respect to the housing,
- a chamber (15) that at least partially surrounds the piston (1) and is formed as a constituent part of the component (4) that is fixed with respect to the housing that forms a cylinder, with the piston (1) being arranged in a rotatable fashion in the chamber (15), and
- a line arrangement (5) that, for conducting a pressure medium for piston actuation, leads through the component (4) that is fixed with respect to the housing to the chamber (15),
**characterized in that**
the piston (1) is arranged such that, during operation, it is permanently in relative movement with respect to the component (4) that is fixed with respect to the housing.

2. Clutch arrangement according to Claim 1, **characterized in that**
an engine torque can be transmitted via a drive flange (8) or a drive wheel (20) to a drive-side plate carrier (9), with the piston (1) being connected rotationally conjointly to the drive flange (8) or drive wheel (20) and to the drive-side plate carrier (9).

3. Clutch arrangement according to one of Claims 1 and 2, **characterized in that**
seals (2) are arranged between walls of the chamber (15) and of the piston (1) in order to hydraulically seal off the rotational movement and the axial movement of the piston (1).

4. Clutch arrangement according to one of Claims 1 to 3, **characterized in that**
no device for centrifugal force compensation in the form of a centrifugal oil compensation piston is provided.

5. Clutch arrangement according to one of Claims 1 to 4,
**characterized in that**
the clutch arrangement has a transmission-side shaft (19) that is mounted by means of a bearing,
it being possible for an axial force to be fed back via the transmission-side shaft (19) and the bearing into the component (4) that is fixed with respect to the housing or into a housing of the clutch arrangement or a transmission housing.

6. Clutch arrangement according to one of Claims 1 to 5,
**characterized in that**
said clutch arrangement is formed with at least one further piston as a multi-piston clutch arrangement, with the further piston (1) also being arranged in a rotatable fashion in a chamber (15), that is assigned to the piston, of a cylinder that is fixed with respect to the housing.

7. Clutch arrangement according to one of Claims 1 to 6,
**characterized in that**
- the piston (1) is of hollow cylindrical design, in particular of hollow cylindrical design at least at the end side, and
- the chamber (15) is of annular or hollow cylindrical design.

## Revendications

1. Dispositif d'embrayage, avec
- un composant (4) solidaire du boîtier,
- un piston (1), qui peut tourner autour d'un axe de rotation (ω) par rapport au composant (4) solidaire du boîtier,
- une chambre (15), qui entoure au moins partiellement le piston (1) et qui est réalisée comme une partie constitutive du composant (4) solidaire du boîtier et formant un cylindre, dans lequel le piston (1) peut tourner dans la chambre (15), et
- un agencement de conduite (5), qui conduit à la chambre (15) pour amener un fluide sous pression destiné à actionner le piston à travers le composant (4) solidaire du boîtier,
**caractérisé en ce que** le piston (1) est disposé de telle manière que, en fonctionnement, celui-ci se trouve toujours en mouvement relatif par rapport au composant (4) solidaire du boîtier.

2. Dispositif d'embrayage selon la revendication 1, **caractérisé en ce qu'**un couple de rotation de moteur peut être transmis par une bride d'entraînement (8) ou une roue motrice (20) à un porte-disques côté entraînement (9), dans lequel le piston (1) est solidaire en rotation de la bride d'entraînement (8) ou de la roue motrice (20) et est relié au porte-disques côté entraînement (9).

3. Dispositif d'embrayage selon l'une quelconque des revendications 1 ou 2, **caractérisé en ce que** des joints d'étanchéité (2) sont disposés entre des parois de la chambre (15) et du piston (1), pour assurer l'étanchéité hydraulique du mouvement de rotation et du mouvement axial du piston (1).

4. Dispositif d'embrayage selon l'une quelconque des revendications 1 à 3, **caractérisé en ce qu'**il n'est prévu aucun dispositif de compensation de la force centrifuge sous la forme d'un piston de compensation de la pression d'huile centrifugée.

5. Dispositif d'embrayage selon l'une quelconque des revendications 1 à 4 en liaison avec une boîte de vitesses, **caractérisé en ce que** le dispositif d'embrayage présente un arbre côté boîte de vitesses (19) supporté par un palier, dans lequel une force axiale peut être retransmise par l'arbre côté boîte de vitesses (19) et le palier dans le composant (4) solidaire du boîtier ou dans un boîtier du dispositif d'embrayage ou un carter de boîte de vitesses.

6. Dispositif d'embrayage selon l'une quelconque des revendications 1 à 5, **caractérisé en ce que** celui-ci est réalisé avec au moins un autre piston en un dispositif d'embrayage à plusieurs pistons, dans lequel l'autre piston (1) est également disposé de façon rotative dans une chambre (15) d'un cylindre solidaire du boîtier associée au piston.

7. Dispositif d'embrayage selon l'une quelconque des revendications 1 à 6, **caractérisé en ce que**
- le piston (1) est réalisé sous forme cylindrique creuse, en particulier sous forme cylindrique creuse au moins côté frontal, et
- la chambre (15) est réalisée sous forme annulaire ou cylindrique creuse.
